# EUROPEAN PATENT APPLICATION

(11) **EP 1 128 252 A2**
(43) Date of publication of application: **29.08.2001**
(21) Application number: 01103679.5
(22) Date of filing: 23.02.2001
(51) Int. Cl.: G06F 3/033, G06F 3/023

(54) **A method and a computer program for responding to a user command in an information processing apparatus and an information processing apparatus**

(30) Priority: 24.02.2000 JP 2000046869
(71) Applicant: NEC CORPORATION, Tokyo (JP)
(72) Inventor: Sameda, Yuji, Minato-ku, Tokyo (JP); Fujiwara, Ichinori, Minato-ku, Tokyo (JP); Muraki, Kazunori, Minato-ku, Tokyo (JP); Endou, Kaoru, Minato-ku, Tokyo (JP)
(74) Representative: VOSSIUS & PARTNER

(57) **Abstract**

When an input apparatus of an information processing apparatus accepts a user command, an operating pattern exhibition means exhibits a first operating pattern. When the application completes the reception of the user command, a prescribed image is displayed on the display apparatus. When the application outputs a response with respect to the user command, the operating pattern exhibition means exhibits a second operating pattern.

## Description

The present invention relates to an input operation from a user with respect to an information processing device such as a personal computer, and more particularly to an operation of responding to an input operation.

In the case in which an application program (hereinafter referred to simply as an application) presenting a relatively light load, such as a word processor, is executed singly on a personal computer, the amount of time from the point at which the user presses a keyboard key to the time a character corresponding to the pressed key appears on the screen of the display apparatus is a short amount of time, which is virtually ignorable in terms of the perception of time as seen by the user. For this reason, it is possible for the user to make an immediate judgment of whether or not the pressed key was correct.

With the widespread used of multitasking processor in recent years, and for a number of reasons, including the recent growth in size of various applications, there are cases in which the application response time becomes perceivably long, and even cases in which the delay time is long enough to make it difficult to distinguish between the delay time and a hang-up of the computer. When such cases occur, it is difficult for the user to judge whether or not the input operation was properly transmitted to the personal computer.

Accompanying the widespread use of personal computer in recent years, there has come an increasing desire for user-friendly personal computer that have an aspect of enjoyment to them, and there are a large number of such leisure-oriented software products appearing, such as screen savers and software related to raising pets. Because these software products, however, are limited in scope to the screen display itself, they lack what is necessary to engender lasting appeal.

According it is an object of the present invention, in view of the above-described situation, to provide means for distinguishing easily from the user whether or not a program has completed receipt of a user command, and whether or not a program has issues a response to a user command.

It is a further object of the present invention to provide means, which while solving the above-noted first problem, provides enjoyment to the user by the user directly touching an actual mechanism, when an input operation is made with respect to an information processing apparatus.

The present invention achieves the above-noted objects by adopting the following basic technical constitution.

Specifically, the first aspect of the present invention is a method for representing a prescribed action or a prescribed image in response to at least one of a plurality of processing steps of an application which is being executed in an information processing apparatus comprising an input apparatus for inputting a user command, a display apparatus for displaying the image and a display mechanism having at least one moving part for representing the action, the method comprising the steps of: receiving the user command from the input apparatus, exhibiting the action of a first operation pattern by controlling the display mechanism in response to receiving of the user command, supplying the user command to the application, representing a prescribed image on the display apparatus in accordance with receiving of the user command by the application, receiving a response to the user command from the application, and exhibiting the action of a second operation pattern by controlling the display mechanism in accordance with the response from the application.

According to a method such described above, after the start and completion of receiving of a user command and after the response thereto, it is possible for the user to view differing operating patterns. In particular, the first and second operation patterns are exhibited by an operating pattern exhibition means having substance, and the image displaying after the first pattern is displayed as a screen, so that the users is given the impression that the operating pattern exhibition means is moving inside and outside the screen, thereby providing the user with enjoyment.

In the second aspect of the present invention, the first operation pattern is one in which a main part of an object representing the prescribed action is hidden by a blocking part, and the second operation pattern is one in which the main part of the object representing the prescribed action appears from behind the blocking part.

If the above is done, when the main part is hidden by the blocking member, the main part is displayed on the screen, and when the main screen is no longer displayed, the main part appears once again from behind the blocking member, so that the continuity between the worlds inside and outside of the screen is more clearly exhibited.

In the third aspect of the present invention, the first operation pattern is one in which a main part of an object representing a prescribed action changes from an active condition to a resting condition, and the second operation pattern is one in which the main part of the object representing the prescribed action changes from the resting condition to the active condition.

In the above-noted case, in particular if an operating pattern exhibition means is used that takes the form of a living creature (a doll or stuffed animal, or the like), it is possible to give the impression to a user that this living creature is moving between inside and outside the personal computer.

The fourth aspect of the present invention is a method for representing a prescribed action or a prescribed image in response to at least one of a plurality of processing steps of an application which is being executed in an information processing apparatus comprising an input apparatus for inputting a user command, a display apparatus for displaying the image and a display mechanism having at least one moving part for representing the action, the method comprising the steps of: receiving the user command from the input apparatus, exhibiting the action of a first operation pattern by controlling the display mechanism and representing the image of a first pattern on the display apparatus in response to receiving of the user command, supplying the user command to the application, exhibiting the action of a second operation pattern by controlling the display mechanism and representing the image of a second pattern on the display apparatus in accordance with receiving of the user command by the application, receiving a response to the user command from the application, and exhibiting the action of a third operation pattern by controlling the display mechanism and representing the image of a third pattern on the display apparatus in accordance with the response from the application.

In this method as well, after the start and completion of receiving of a user command and after the response thereto, it is possible for the user to view differing operating patterns. In this method, however, all of the operating patterns are represented as operating in cooperation inside and outside the screen.

The present invention provides the first information processing apparatus comprising an input apparatus for inputting a user command, a display apparatus for displaying a prescribed image and a display mechanism having at least one moving part for representing a prescribed action in response to at least one of a plurality of processing steps of an application which is being executed, the apparatus further comprising: a first means for exhibiting the action of a first operation pattern by controlling the display mechanism in response to inputting of the user command, a second means for supplying the user command to the application and receiving a response to the user command from the application, a third means for representing a prescribed image on the display apparatus in accordance with receiving of the user command by the application, a fourth means for exhibiting the action of a second operation pattern by controlling the display mechanism in accordance with the response from the application.

The present invention provides the second information processing apparatus comprising an input apparatus for receiving a user command, a display apparatus for displaying a prescribed image and a display mechanism having at least one moving part for representing a prescribed action in response to at least one of a plurality of processing steps of an application which is being executed, the apparatus further comprising: a first means for exhibiting the action of a first operation pattern by controlling the display mechanism and representing the image of a first pattern on the display apparatus in response to inputting of the user command, a second means for supplying the user command to the application and receiving a response to the user command from the application, a third means for exhibiting the action of a second operation pattern by controlling the display mechanism and representing the image of a second pattern on the display apparatus in accordance with receiving of the user command from the application, and a fourth means for exhibiting the action of a third operation pattern by controlling the display mechanism and representing the image of a third pattern on the display apparatus in accordance with the response from the application.

Fig. 1 is a block diagram showing a computer system of the first embodiment of the present invention.

Fig. 2 is a flowchart illustrating the operation of the computer system of the first embodiment when a user command is input.

Fig. 3 is a flowchart illustrating the operation of the computer system of the first embodiment when a user command is input.

Fig. 4 is a flowchart illustrating the operation of the computer system of the first embodiment when a user command is input.

Fig. 5 is a block diagram showing a computer system of the second embodiment of the present invention.

Fig. 6 is a flowchart illustrating the operation of the computer system of the second embodiment when a user command is input.

Embodiments of the present invention are described in detail below, with references made to relevant accompanying drawings.

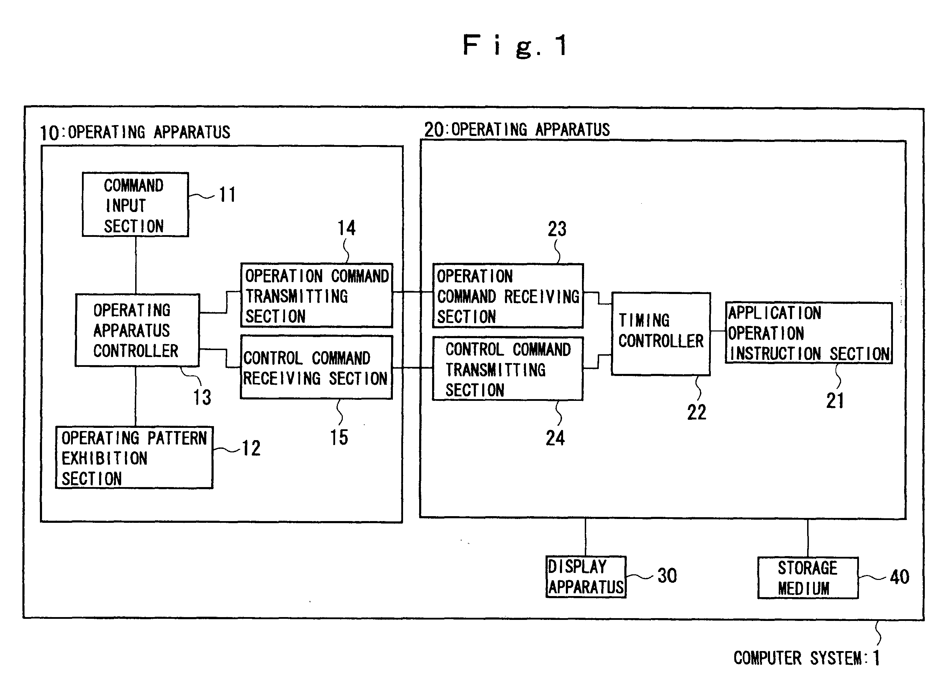

The first embodiment of the present invention is described below, with reference being made to Fig. 1, which shows the present invention as a computer system 1. The computer system 1 can be generally divided into operating apparatuses 10 and 20, a display apparatus 30, and a storage medium 40. The display apparatus 30 is a display apparatus such as a CRT or a liquid-crystal display or the like. The storage medium 40 is an external storage apparatus such as a magnetic disk apparatus.

The operating apparatus 10 is formed by an command input section 11, an operating pattern exhibition section 12, an operating apparatus controller 13, an operating command transmitting section 14, and a control command receiving section 15.

The command input section 11 is an apparatus with which a user directly inputs a command to the computer system 1, this being typically a keyboard or mouse.

The operating pattern input section 12 has at least one moving part that operates under motor drive, and exhibits an operating pattern in accordance with an instruction from the operating apparatus controller 13. The operating pattern exhibition section 12 can additionally have a light-emitting section such as a lamp or light-emitting diode, or an audio output section that outputs a sound. The operating pattern is a program that establishes the time period during which the moving part, the light-emitting section, and the audio output section operate and also timing at which the moving part, the light-emitting section, and the audio output section begin to start execution.

The operating apparatus controller 13 relays a command input via the command input section 11, sending the command to the operating apparatus 20 via the operation command transmitting section 14, and also issues an operating pattern instruction to the operating pattern exhibition section 12 responsive to the command.

As an example of the operation of the operating pattern exhibition section 12 and the operating pattern, it can be envisioned that the operating patterns of the operating pattern exhibition section 12 are implemented by a tunnel and a model of a vehicle, the vehicle being driven by a motor so as to move forward and back, entering and exiting the tunnel, with two operating patterns being the action of "the vehicle hiding in the tunnel" (motor driven forward) and the action of "the vehicle appearing from the tunnel" (motor drive in reverse). In this example, because there is only one motor, the operating patterns are quite simple. However, if a stuffed-doll type character with motor-drive joints is used as the operating pattern exhibition section 12, it is possible to establish diverse operating patterns.

The operation command transmitting section 14 sends the command input by the user to the operating apparatus 20.

The control command receiving section 15 receives various control commands from the operating apparatus 20 and passes them to the operating apparatus controller 13.

The operating apparatus 20 includes an application operation instruction section 21, a timing controller 22, an operation command receiving section 23, and a control command transmitting section 24. These elements are implemented as software of the operating apparatus 20, and it will be understood that these can alternatively be implemented by combinations of separately provided hardware.

The application operation instruction section 21 causes the operating pattern exhibition section 12 to display an image to exhibit an operating pattern on the screen of the display apparatus 30. The image of the operating pattern exhibition section 12 that is displayed on the screen will be referred to as a software operating pattern exhibition. The application operation instruction section 21 receives a user command from the timing controller 22 and passes it to the operating system or an application, and returns a response from the operating system or application to the timing controller 22.

The timing controller 22 controls the timing of operation of the operating pattern exhibition section 12 and the above-mentioned software operating pattern exhibition.

The operation command receiving section 23 receives from the operating apparatus 10 a command input by the user.

The control command transmitting section 24 receives a control command from the timing controller 22 and sends it to the operating apparatus 10.

The display apparatus 30 displays various video signals output by the operating apparatus 20 on a screen.

The storage medium 40 stores the constituent elements of the operating apparatus 20.

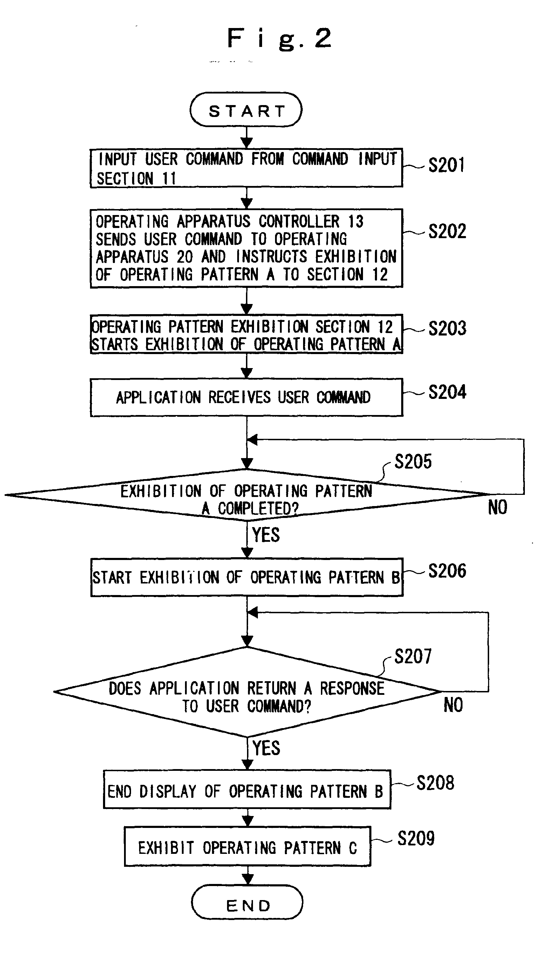

The operation of the computer system 1 is described below, with reference made to the flowchart of Fig. 2.

The user inputs a user command to the operating apparatus 20 from the command input section 11 (step S201).

The apparatus controller 13 selects an operating pattern A responsive to the user command, issues an instruction to the operating pattern exhibition section 12 to start exhibition of the operating pattern A, and sends the user command to the operating apparatus 20 via the operation command transmitting section 14 (step S202). If the operating pattern exhibition section 12 has a sufficient number of moving parts to exhibit a complex operation, it is possible to make available a plurality of operating patterns as the operating pattern A, in which case, if commands to the operating apparatus 20 are classified into a number of types beforehand and the operating pattern A is established in accordance with the command that is input from the command input section 11, it is possible for the operating pattern exhibition section 12 to exhibit a diversity of operating patterns to the user.

The operating pattern exhibition section 12 starts exhibition of the operating pattern A (step S203).

The timing controller 22 receives the user command via the operation command receiving section 23 and passes the user command to the application operation instruction section 21, which passes the user command to the operating system or the application being executed (step S204).

The timing controller 22 sends a control command that verifies the end of the operating pattern A to the operating apparatus 10 via the control command transmitting section 24. When the operating apparatus controller 13 receives the control command via the control command receiving section 15, it verifies whether or not the exhibition of the operating pattern A is completed at the operating pattern exhibition section 12, and after the verification it issues a notification of the end of the exhibition of the operating pattern A to the application operation instruction section 21, via the operation command transmitting section 14, the operation command receiving section 23, and the timing controller 22 (step S205).

The application operation instruction section 21, using the display apparatus 30, starts display of an image that represents the exhibition of an operating pattern B by the software operating pattern part (step S206). The operating pattern B is an operating pattern that is continuous with the operating pattern A. This image can be a moving image that has been priorly photographed from the operating pattern B exhibited by the operating pattern exhibition section 12, and can alternatively be a generated as moving animation image. In contrast to the operating pattern A, the operating pattern B need not be a pattern that can be exhibited by the operating pattern exhibition section 12. For example, with the operating pattern exhibition section 12 formed by an entrance that is formed at one end of a tunnel on a slope and a model of a vehicle that can, in response to drive from a motor, move forward and back so as to hide in the tunnel and appear from within the tunnel, it can be envisioned that the operating pattern A be made the operating pattern of "the vehicle located outside tunnel hiding inside the tunnel" and the operating pattern B be made the operating pattern of "the vehicle exiting the other side the of the tunnel and stopping, after which the driver thereof gets out of the vehicle and inputs a command to the personal computer". If this is done, the operating pattern exhibition section 12 must be provided with a moving part capable of exhibiting the other exit of the tunnel and the action of getting out of the vehicle and making an input to the personal computer. Stated differently, there is no need to limit the operating pattern B to an operating pattern that can be exhibited by the operating pattern exhibition section 12. The continuity between the operating pattern A and the operating pattern B need only be made sufficient for the user to subjectively perceive continuity therebetween.

When the operating system or the application returns a response to the user command (step S207), the application operation instruction section 21 ends the display of the operating pattern B by the software operating pattern exhibition (step S208), and notifies the timing controller 22 that there has been a response. The timing controller 22 notifies the operating apparatus 10 that a response from the operating system or the application occurred. Upon receiving this notification, the operating apparatus controller 13 issues an instruction to the operating pattern exhibition section 12 to exhibit an operating pattern C (step S209). The operating pattern C is continuous with the operating pattern B and is an operating pattern that can be exhibited by the operating pattern exhibition section 12. For the above-noted example of the tunnel and the vehicle model, the operating pattern C would be the operating pattern of "the vehicle in the tunnel comes out of the tunnel".

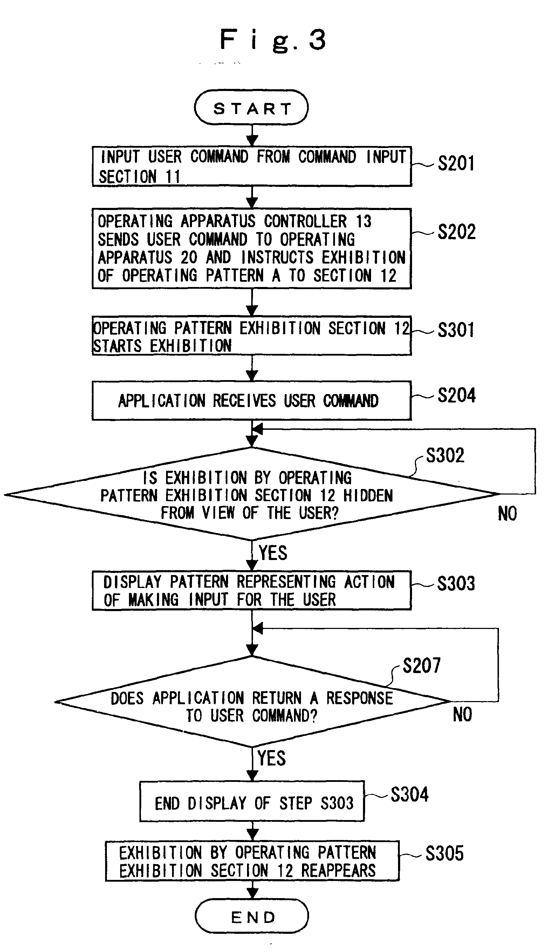

In this embodiment of the present invention, the operating pattern exhibition section 12 exhibits an operating pattern A in the real world and then exhibits the operating pattern B as if it were inside the screen, returning thereafter to the real world and exhibiting the operating pattern C, thereby playing out a story formed by a series of events, it is sufficient that the user be caused to perceive this, and it is possible to provide the user with a variety of other such stories. For example, when a scene in which a doll or model of an animal can enter and exit a house or a nesting hole is used as the operating pattern exhibition section 12, when a user inputs a command, a doll or animal holding this command can enter a building and execute the command for the user therewithin, and when the input is completed, the doll or animal exits the building, thereby ending the story that is presented to the user. This process is illustrated in Fig. 3. In this case, the operating pattern B that is displayed on the screen is one showing the inside of the building to the user.

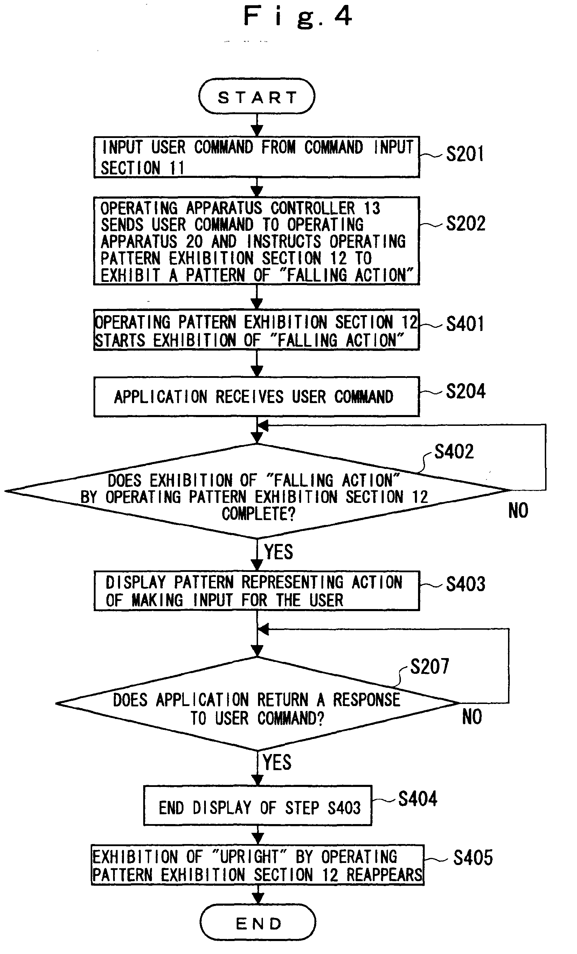

Additionally, although in the examples discussed thus far, the moving part of the operating pattern exhibition section 12 first exits the field of view of the user and then reappears, it will be understood that there is no need for the moving part to disappear. For example, if the user to some extent accepts the concept of a spirit separating from a body and transferring to another body, it is possible to use as the operating pattern exhibition section 12 a doll or the like that exhibits two types of operations, one being an "upright" condition, and the other being a "sleeping" condition. When this doll or the like is caused to change from operating pattern A to operating pattern C, it changes through the conditions "upright", "sleeping" and "upright." During the period of time in which the doll is in the sleeping condition, operating pattern B in which a doll inputs a user command is displayed on the screen. In this case, the spirit of the doll that has received a command transfers to the inside of the personal computer for execution thereof, after which it appears to return to outside the personal computer. This process is illustrated in Fig. 4.

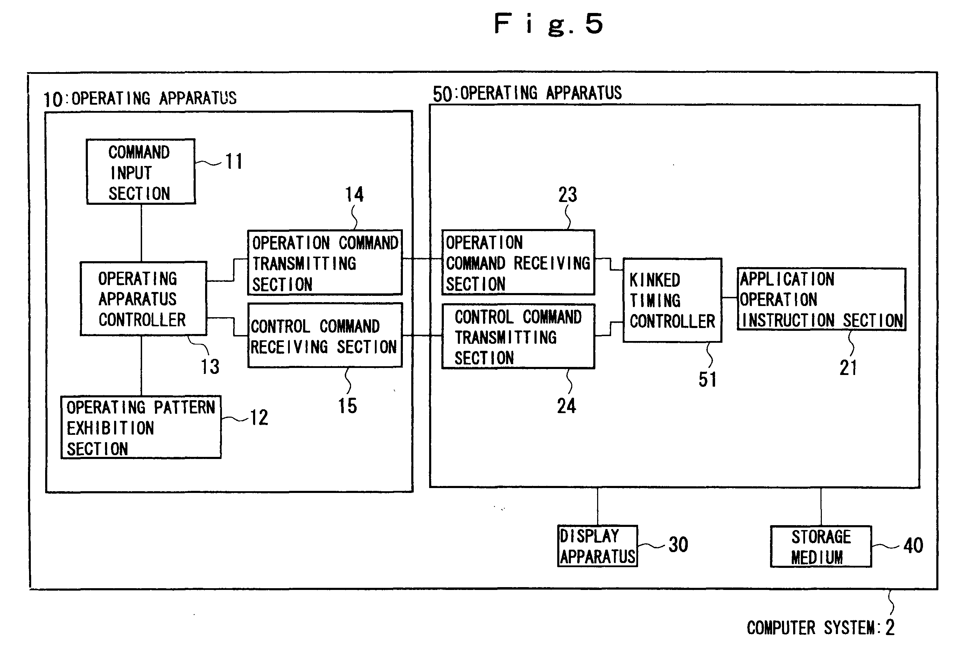

A second embodiment of the present invention is described below, with references being made to Fig. 5, which shows the present invention as a computer system 2. In this drawing, elements that are the same as elements in the computer system 1 of Fig. 1 are assigned the same reference numerals. The difference between computer systems 1 and 2 is that in the computer system 2 the timing controller 22 is replaced by a linked timing controller 51.

The timing controller 22 of the first embodiment performed control so that the operating pattern exhibition section 12 and the software operating pattern exhibition section operated alternately. Stated differently, with the timing controller 22, the operating pattern exhibition section 12 and the software operating pattern exhibition section did not operate simultaneously. This is because, in the first embodiment, the concept is one in which a doll or the like acting to perform inputting a user command transmits the user command by moving between inside and outside the screen.

In contrast to the first embodiment, in the second embodiment the operating pattern exhibition section 12 and the software operating pattern exhibition section operate simultaneously. For this reason, the linked timing controller 51 simultaneously sends control commands to the operating apparatus controller 13 and the application operation instruction section 21.

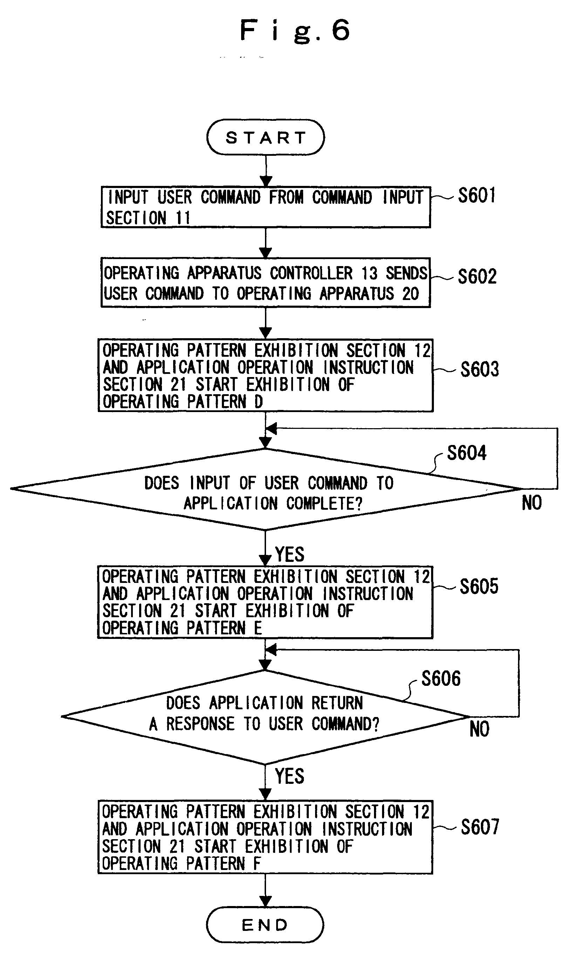

The operation of the computer system 2 is described below, with reference made to Fig. 6. A user command is input from the command input section 11 (step S601), and the operating apparatus controller 13 sends the command to via operation command transmitting section 14 to the operating apparatus 50 (step S602). The transmitted user command is received by the linked timing controller 51 via the operation command receiving section 23.

The linked timing controller 51 sends a control command to start the operating pattern D to both the operating apparatus controller 13 and the application operation instruction section 21. The application operation instruction section 21 then starts to pass the user command to the application. In contrast to the above-described operating pattern A, B and C, the operating pattern D is established as an operating pattern that has a meaning for linked operation between the action performed by the operating pattern exhibition section 12 and the display by the display apparatus 30. In accordance with the above-noted control commands, the operating pattern exhibition section 12 and the application operation instruction section 21 each performs executing of the operating pattern D (step S603).

When the application operation instruction section 21 finishes inputting the user command to the application (step S604), the application operation instruction section 21gives notification of this fact to the linked timing controller 51. Receiving this notification, the linked timing controller 51 instructs the operating apparatus controller 13 and the application operation instruction section 21 so as to perform executing of the operating pattern E (step S605).

Additionally, when the application operation instruction section 21 receives a response from the application to the user command (step S606), the application operation instruction section 21 gives notification of the receiving the response to the linked timing controller 51. Upon receiving this notification, the linked timing controller 51 instructs the operating apparatus controller 13 and the application operation instruction section 21 to perform executing of the operating pattern E (step S607).

According to the first embodiment of the present invention, the input of a user command is verified by the start of the exhibition of the operating pattern A, and the time when the operating system or application starts to receive the user command is verified by the start of the display of the operating pattern B or ending of the display of the operating pattern A, the time when the operating system or application returning a response to the user command is verified by the start of the display of the operating pattern C or ending of the display of the operating pattern B. Thus, it is possible for the user to quickly know during execution by the operating apparatus 20 whether or not a user-input command has been received, or whether the operating apparatus 20 is executing the command.

According to the first embodiment of the present invention, when a user inputs a command, it appears as if the operating pattern exhibition section 12 receives the command and moves it into the screen of the display apparatus 30, and then inputs the command to the application, after which, upon receiving a response from the application, it appears that return is made from the world inside the screen, so that the user is presented with an enjoyable event when a command is input.

According to the second embodiment, the input of a user command is verified by the start of the exhibition of the operating pattern D, and the next stage that the operating system or application starts to receive the user command is verified by a transition from the operating pattern D to the operating pattern E, the next stage that the operating system or application returning a response to the user command is verified by a transition from the operating pattern E to the operating pattern F. Thus, it is possible for the user to quickly know during execution by the operating apparatus 50 whether or not a user-input command has been received, or whether the operating apparatus 50 is executing the command.

Additionally, according to the second embodiment of the present invention when a user inputs a command, the operating pattern exhibition section 12 and the software operating pattern execution section response with various operating patterns, thereby providing enjoyment to the user.

## Claims

1. A method for representing a prescribed action or a prescribed image in response to at least one of a plurality of processing steps of an application which is being executed in an information processing apparatus comprising an input apparatus for inputting a user command, a display apparatus for displaying said image and a display mechanism having at least one moving part for representing said action, said method comprising the steps of:
receiving said user command from said input apparatus,
exhibiting said action of a first operation pattern by controlling said display mechanism in response to receiving of said user command,
supplying said user command to said application,
representing a prescribed image on said display apparatus in accordance with receiving of said user command by said application,
receiving a response to said user command from said application, and
exhibiting said action of a second operation pattern by controlling said display mechanism in accordance with said response from said application.

2. A method according to claim 1, wherein said first operation pattern is one in which a main part of an object representing said prescribed action is hidden by a blocking part, and
said second operation pattern is one in which said main part of said object appears from behind said blocking part.

3. A method according to claim 1, wherein said first operation pattern is one in which a main part of an object representing said prescribed action changes from an active condition to a resting condition, and said second operation pattern is one in which a main part of said object changes from said resting condition to said active condition.

4. A method for representing a prescribed action or a prescribed image in response to at least one of a plurality of processing steps of an application which is being executed in an information processing apparatus comprising an input apparatus for inputting a user command, a display apparatus for displaying said image and a display mechanism having at least one moving part for representing said action, said method comprising the steps of:
receiving said user command from said input apparatus,
exhibiting said action of a first operation pattern by controlling said display mechanism and representing said image of a first pattern on said display apparatus in response to receiving of said user command,
supplying said user command to said application,
exhibiting said action of a second operation pattern by controlling said display mechanism and representing said image of a second pattern on said display apparatus in accordance with receiving of said user command by said application,
receiving a response to said user command from said application, and
exhibiting said action of a third operation pattern by controlling said display mechanism and representing said image of a third pattern on said display apparatus in accordance with said response from said application.

5. A computer program for representing a prescribed action or a prescribed image in response to at least one of a plurality of processing steps of an application which is being executed in an information processing apparatus comprising an input apparatus for inputting a user command, a display apparatus for displaying said image and a display mechanism having at least one moving part for representing said action, said computer program causing a computer to execute a method comprising the steps of:
receiving said user command from said input apparatus,
exhibiting said action of a first operation pattern by controlling said display mechanism in response to inputting of said user command,
supplying said user command to said application,
representing a prescribed image on said display apparatus in accordance with receiving of said user command by said application,
receiving a response to said user command from said application, and
exhibiting said action of a second operation pattern by controlling said display mechanism in accordance with said response from said application.

6. A computer program for representing a prescribed action or a prescribed image in response to at least one of a plurality of processing steps of an application which is being executed in an information processing apparatus comprising an input apparatus for inputting a user command, a display apparatus for displaying said image and a display mechanism having at least one moving part for representing said action, said computer program causing a computer to execute a method comprising the steps of:
receiving said user command from said input apparatus,
exhibiting said action of a first operation pattern by controlling said display mechanism and representing said image of a first pattern on said display apparatus in response to inputting of said user command,
supplying said user command to said application,
exhibiting said action of a second operation pattern by controlling said display mechanism and representing said image of a second pattern on said display apparatus in accordance with receiving of said user command by said application,
receiving a response to said user command from said application, and
exhibiting said action of a third operation pattern by controlling said display mechanism and representing said image of a third pattern on said display apparatus in accordance with said response from said application.

7. An information processing apparatus comprising an input apparatus for inputting a user command, a display apparatus for displaying a prescribed image and a display mechanism having at least one moving part for representing a prescribed action in response to at least one of a plurality of processing steps of an application which is being executed, said apparatus further comprising:
a first means for exhibiting said action of a first operation pattern by controlling said display mechanism in response to inputting of said user command,
a second means for supplying said user command to said application and receiving a response to said user command from said application,
a third means for representing a prescribed image on said display apparatus in accordance with receiving of said user command by said application,
a fourth means for exhibiting said action of a second operation pattern by controlling said display mechanism in accordance with said response from said application.

8. An information processing apparatus according to claim 7, wherein said first operation pattern is one in which a main part of an object representing said prescribed action is hidden by a blocking part, and
said second operation pattern is one in which said main part of said object appears from behind said blocking part.

9. An information processing apparatus according to claim 7, wherein said first operation pattern is one in which a main part of an object representing said prescribed action changes from an active condition to a resting condition, and said second operation pattern is one in which a main part of said object changes from said resting condition to said active condition.

10. An information processing apparatus comprising an input apparatus for receiving a user command, a display apparatus for displaying a prescribed image and a display mechanism having at least one moving part for representing a prescribed action in response to a plurality of processing steps of an application which is being executed, said apparatus further comprising:
a first means for exhibiting said action of a first operation pattern by controlling said display mechanism and representing said image of a first pattern on said display apparatus in response to inputting of said user command,
a second means for supplying said user command to said application and receiving a response to said user command from said application,
a third means for exhibiting said action of a second operation pattern by controlling said display mechanism and representing said image of a second pattern on said display apparatus in accordance with receiving of said user command from said application, and
a fourth means for exhibiting said action of a third operation pattern by controlling said display mechanism and representing said image of a third pattern on said display apparatus in accordance with said response from said application.
